# EUROPEAN PATENT APPLICATION

(11) **EP 4 840 889 A1**
(43) Date of publication of application: **18.11.2026**
(21) Application number: 25738929.6
(22) Date of filing: 10.01.2025
(51) Int. Cl.: C08F 8/46, C08F 110/06, C08K 5/1535, C08L 23/26

(54) **POLYMER COMPOSITION, METHOD FOR MANUFACTURING POLYMER COMPOSITION, METHOD FOR MANUFACTURING SOLUTION OF CRUDE POLYMER COMPOSITION, AND METHOD FOR MANUFACTURING CRUDE POLYMER COMPOSITION**

(30) Priority: 10.01.2024 JP 2024001830
(71) Applicant: Mitsubishi Chemical Corporation, Tokyo 100-8251 (JP)
(72) Inventor: KUROSE Shohei, Tokyo 100-8251 (JP); KUDO Kenji, Tokyo 100-8251 (JP)
(74) Representative: Vossius & Partner Patentanwälte Rechtsanwälte mbB
(86) International application number: PCT/JP2025/000670
(87) International publication number: WO 2025/150562

(57) **Abstract**

The object of the present invention is to provide a polymer composition which provides a molded product having a small change in hue, particularly a small value of a yellowness index (YI), a method for producing a polymer composition which provides a molded product having a small change in hue, particularly a small value of a yellowness index (YI), as well as a method for producing a solution of a crude polymer composition and a method for producing a crude polymer composition, which can be included as a process of the method for producing a polymer composition. The present invention relates to a polymer composition including an acid-modified polypropylene and at least one dimethylfuran compound selected from the group consisting of 2,5-dimethylfuran, 2,4-dimethylfuran, and 3,4-dimethylfuran, in which the total content of the dimethylfuran compounds based on the total mass of the polymer composition is less than 15 ppm by mass, as well as methods for producing the polymer composition, a solution of a crude polymer composition or a crude polymer composition, including specific steps in a specific order.

## Description

### Technical Field

The present invention relates to a polymer composition, a method for producing the polymer composition, a method for producing a solution of a crude polymer composition, and a method for producing a crude polymer composition.

### Background Art

Polypropylene, which is a general-purpose polymer (the term "polypropylene" in the present description includes a copolymer of propylene and another copolymerizable monomer, but an acid-modified polypropylene is not included.), is relatively inexpensive and has favorable properties such as moldability, heat resistance, solvent resistance, mechanical properties, and appearance, and therefore, is processed into various molded products and used in various fields. However, polypropylene is basically composed of a saturated hydrocarbon, and is poor in chemical reactivity and low in polarity, and therefore, improvement in adhesiveness, coatability, and printability has been desired.

As a method for improving these properties, a method for modifying polypropylene by graft reaction of an unsaturated carboxylic acid or an anhydride thereof, represented by maleic anhydride, to polypropylene is known. Such an acid-modified polypropylene is produced by graft reaction of an acid component using, as an initiator, radicals generated by an organic peroxide, a thermal decomposition method, or the like (Patent Literature 1).

The graft reaction of polypropylene includes a solution modification method for modifying polypropylene in an organic solvent and a melt modification method for modifying polypropylene while heating and melting it. The solution modification method is characterized in that it enables the reaction to proceed at a relatively low temperature, facilitates a graft reaction to proceed uniformly, and facilitates an acid-modified polypropylene with a large graft amount to be obtained.

### Citation List

### Patent Literature

Patent Literature 1: JP 2006-328388 A

### Summary of Invention

### Technical Problem

However, a polymer composition containing an acid-modified polypropylene produced by the solution modification method has a problem that a sheet produced by hot pressing the polymer composition has a variation in a yellowness index (hereinafter, also referred to as "YI") depending on the production history. When such a polymer composition is used for molding a film, a sheet, a bottle, or the like, there has been a problem in the hue of a molded product.

Accordingly, an object of the present invention is to provide a polymer composition which provides a molded product having a small change in hue, particularly a small value of a yellowness index (YI). Another object of the present invention is to provide a method for producing a polymer composition which provides a molded product having a small change in hue, particularly a small value of the yellowness index (YI). Yet another object of the present invention is to provide a method for producing a solution of a crude polymer composition and a method for producing a crude polymer composition, which can be included as a process of the method for producing the polymer composition.

### Solution to Problem

As a result of diligent studies in view of such circumstances, the present inventors have surprisingly found that, in a polymer composition containing an acid-modified polypropylene and at least one dimethylfuran compound selected from the group consisting of 2,5-dimethylfuran, 2,4-dimethylfuran, and 3,4-dimethylfuran, when the total content of the dimethylfuran compounds based on the total mass of the polymer composition is less than a specific numerical value, a polymer composition having a small change in hue of a molded product, particularly a small value of the yellowness index (YI), can be obtained, and thus have completed the present invention. Moreover, the present inventors have found that a polymer composition having a small change in hue of a molded product, particularly a small value of the yellowness index (YI), can be produced by a production method including specific steps in a specific order, and thus have completed the present invention.

That is, the gist of the present invention is as follows.

An aspect 1 of the present invention relates to a polymer composition, containing
an acid-modified polypropylene and at least one dimethylfuran compound selected from the group consisting of 2,5-dimethylfuran, 2,4-dimethylfuran, and 3,4-dimethylfuran, wherein
a total content of the dimethylfuran compound based on a total mass of the polymer composition is less than 15 ppm by mass.

An aspect 2 of the present invention relates to the polymer composition according to the aspect 1, wherein the total content of the dimethylfuran compounds based on the total mass of the polymer composition is 0.5 ppm by mass or more.

An aspect 3 of the present invention relates to the polymer composition according to the aspect 1 or 2, wherein
the total content of the dimethylfuran compounds based on the total mass of the polymer composition is 1 ppm by mass or more.

An aspect 4 of the present invention relates to the polymer composition according to any one of the aspects 1 to 3, wherein the total content of the dimethylfuran compounds based on the total mass of the polymer composition is 12 ppm by mass or less.

An aspect 5 of the present invention relates to the polymer composition according to any one of the aspects 1 to 4, wherein the polymer composition has a melt flow rate of from 150 to 2000 g/10 min as measured under conditions of 180°C and a load of 21.2 N in accordance with JIS K 7210:2014.

An aspect 6 of the present invention relates to the polymer composition according to any one of the aspects 1 to 5, wherein a graft ratio of the acid-modified polypropylene is from 1.0 to 20 mass%.

An aspect 7 of the present invention relates to a food packaging material, including the polymer composition according to any one of the aspects 1 to 6.

An aspect 8 of the present invention relates to a medical product, including the polymer composition according to any one of the aspects 1 to 6.

An aspect 9 of the present invention relates to an automobile part, including the polymer composition according to any one of the aspects 1 to 6.

An aspect 10 of the present invention relates to a battery component, including the polymer composition according to any one of the aspects 1 to 6.

An aspect 11 of the present invention relates to use of the polymer composition according to any one of the aspects 1 to 6 for a food packaging material.

An aspect 12 of the present invention relates to use of the polymer composition according to any one of the aspects 1 to 6 for a medical product.

An aspect 13 of the present invention relates to use of the polymer composition according to any one of the aspects 1 to 6 for an automobile part.

An aspect 14 of the present invention relates to use of the polymer composition according to any one of the aspects 1 to 6 for a battery component.

An aspect 15 of the present invention relates to a method for producing the polymer composition according to any one of the aspects 1 to 6, the method including
the following step 1A to step 5A in this order:
step 1A:
   heat-dissolving polypropylene and at least one acid component selected from the group consisting of unsaturated carboxylic acids and derivatives thereof, in a reaction solvent containing an aromatic hydrocarbon-based solvent and at least one selected from the group consisting of acetone and derivatives thereof to obtain a solution 1A containing the polypropylene and the acid component;
step 2A:
   adding an organic peroxide to the solution 1A to obtain a solution 2A containing an acid-modified polypropylene;
step 3A:
   separating the solution 2A into a polymer composition and a filtrate to obtain the polymer composition;
step 4A:
   Subjecting the filtrate to a purification treatment to obtain a treated solvent, and
step 5A:
   reusing the treated solvent as a part or all of the reaction solvent in the step 1A.

An aspect 16 of the present invention relates to the production method according to the aspect 15, wherein
the step 3A includes separating the solution 2A into the polymer composition and the filtrate by crystallization purification.

An aspect 17 of the present invention relates to the production method according to the aspect 15 or 16, wherein
the purification treatment in the step 4A includes purification by distillation.

An aspect 18 of the present invention relates to the production method according to any one of the aspects 15 to 17, wherein a total content of the at least one selected from the group consisting of acetone and derivatives thereof based on a total mass of the treated solvent is 0.2 mass% or less.

An aspect 19 of the present invention relates to a method for producing the polymer composition described in any one of the aspects 1 to 6, the method including
the following step 1B to step 4B in this order:
step 1B:
   heat-dissolving polypropylene and at least one acid component selected from the group consisting of unsaturated carboxylic acids and derivatives thereof in a reaction solvent containing an aromatic hydrocarbon-based solvent and at least one selected from the group consisting of acetone and derivatives thereof to obtain a solution 1B containing the polypropylene and the acid component;
step 2B:
   adding an organic peroxide to the solution 1B to obtain a solution 2B containing an acid-modified polypropylene;
step 3B:
   separating the solution 2B into a polymer composition and a filtrate by crystallization purification to obtain the polymer composition; and
step 4B:
   purifying the filtrate by distillation.

An aspect 20 of the present invention relates to a method for producing a solution of a crude polymer composition containing
an acid-modified polypropylene and at least one dimethylfuran compound selected from the group consisting of 2,5-dimethylfuran, 2,4-dimethylfuran, and 3,4-dimethylfuran, the method including
the following step 1C to step 2C in this order:
   step 1C:
      heat-dissolving polypropylene and at least one acid component selected from the group consisting of unsaturated carboxylic acids and derivatives thereof in a reaction solvent containing an aromatic hydrocarbon-based solvent and at least one selected from the group consisting of acetone and derivatives thereof to obtain a solution 1C containing the polypropylene and the acid component; and
   step 2C:
      adding an organic peroxide to the solution 1C to obtain a solution 2C of a crude polymer composition containing an acid-modified polypropylene.

An aspect 21 of the present invention relates to a method for producing a crude polymer composition containing
an acid-modified polypropylene and at least one dimethylfuran compound selected from the group consisting of 2,5-dimethylfuran, 2,4-dimethylfuran, and 3,4-dimethylfuran, the method including
the following step 1D to step 3D in this order:
   step 1D:
      heat-dissolving polypropylene and at least one acid component selected from the group consisting of unsaturated carboxylic acids and derivatives thereof in a reaction solvent containing an aromatic hydrocarbon-based solvent and at least one selected from the group consisting of acetone and derivatives thereof to obtain a solution 1D containing the polypropylene and the acid component;
   step 2D:
      adding an organic peroxide to the solution 1D to obtain a solution 2D containing an acid-modified polypropylene; and
   step 3D:
      separating the solution 2D into a crude polymer composition and a filtrate to obtain the crude polymer composition.

An aspect 22 of the present invention relates to the production method according to the aspect 21, including a step 4D and a step 5D after the step 3D in this order:
step 4D:
   subjecting the filtrate to a purification treatment to obtain a treated solvent; and
step 5D:
   reusing the treated solvent as a part or all of the reaction solvent in the step 1D.

An aspect 23 of the present invention relates to the production method according to the aspect 21 or 22, wherein the step 3D includes separating the solution 2D into the crude polymer composition and the filtrate by crystallization purification.

An aspect 24 of the present invention relates to the production method according to the aspect 22, wherein the purification treatment in the step 4D includes purification by distillation.

An aspect 25 of the present invention relates to the production method according to the aspect 22 or 24, wherein a total content of the at least one selected from the group consisting of acetone and derivatives thereof based on a total mass of the treated solvent is 0.2 mass% or less.

An aspect 26 of the present invention relates to the production method according to any one of the aspects 21 to 25, wherein a total content of the dimethylfuran compounds based on a total mass of the crude polymer composition is less than 15 ppm by mass.

### Advantageous Effects of Invention

According to the present invention, a polymer composition can be provided, which provides a molded product having a small change in hue, particularly a small value of the yellowness index (YI). Moreover, according to the present invention, there can be provided a method for producing a polymer composition which provides a molded product having a small change in hue, particularly a small value of the yellowness index (YI). Furthermore, according to the present invention, there can be provided a method for producing a solution of a crude polymer composition and a method for producing a crude polymer composition, which can be included as a process of the method for producing the polymer composition.

### Description of Embodiments

Embodiments of the present invention will be described in detail below, and the following embodiments are examples of embodiments of the present invention, and the present invention is in no way limited thereto. The present invention can be performed with any modification within a scope not departing from the gist thereof.

In the present description, when numerical values or physical property values are expressed before and after "to" in the description of a range, the values before and after "to" are included in the range. In the present description, for numerical ranges described stepwise, the upper limit value or the lower limit value of a numerical range in a certain step can be optionally combined with the upper limit value or the lower limit value of a numerical range in another step. In addition, for a numerical range described herein, the upper limit value or the lower limit value of the numerical range can also be replaced by a value shown in examples.

### Polymer Composition

A polymer composition according to an embodiment of the present invention is a polymer composition containing an acid-modified polypropylene and at least one dimethylfuran compound selected from the group consisting of 2,5-dimethylfuran, 2,4-dimethylfuran, and 3,4-dimethylfuran, wherein the total content of the dimethylfuran compounds is less than 15 ppm by mass based on the total mass of the polymer composition.

It is to be noted that in the present description, when the dimethylfuran compound includes only one compound, the total content of the dimethylfuran compounds means the content of the compound. When the dimethylfuran compounds include two or more dimethylfuran compounds, the total content of the dimethylfuran compounds means the total content of the compounds.

Components and the like that can be contained in the polymer composition will be described in detail below.

### Acid-Modified Polypropylene

The polymer composition according to an embodiment of the present invention contains an acid-modified polypropylene. The acid-modified polypropylene is obtained by grafting an acid component to polypropylene. The polymer composition according to an embodiment of the present invention is preferably a composition in which the polymer component is composed of the acid-modified polypropylene.

In one embodiment, the acid-modified polypropylene can be obtained in the form of being contained in the polymer composition by a method for producing a polymer composition described later.

### Graft Ratio

The graft ratio means the contents of an unsaturated carboxylic acid and/or a derivative component thereof, when the unsaturated carboxylic acid and/or the derivative component thereof as standard samples in the acid-modified polypropylene are preliminarily quantified by a nuclear magnetic resonance measurement method, and a calibration curve created from the quantified values is used to determine the contents measured by an infrared spectrometer. They can be determined by measuring characteristic absorptions of the carboxylic acid and/or derivatives thereof, specifically the characteristic absorption of carbonyl at from 1900 to 1600 cm⁻¹ (C=O stretching vibration band), in, for example, a sample press-molded into a sheet with a thickness of approximately 100 µm.

It is to be noted that an unsaturated carboxylic acid and/or derivatives thereof which did not undergo the reaction and have not reacted with the raw material polypropylene may also remain in the acid-modified polypropylene. As a pretreatment for such a residue, a press-molded sample is placed in a Soxhlet extractor, acetone is refluxed at 80°C for 1 hour, and then the sheet after being dried at 80°C for 2 hours is measured as a sample, whereby the amounts of the unsaturated carboxylic acid and/or derivatives thereof which were graft-polymerized to the polypropylene in the measurement sample can be determined.

In examples described below, the amount of the unsaturated carboxylic acid and/or derivatives thereof remaining in the acid-modified polypropylene was 0.01 mass% or less, which was a negligible amount, and therefore the pretreatment described above was not performed.

When the graft ratio is 1.0 mass% or more, a large amount of polar groups such as carboxylic acid groups contained in the acid component can be introduced into the polymer, and the adhesiveness to the polar polymer can be enhanced, which is preferable. In addition, when the graft ratio is 20 mass% or less, a decrease in molecular weight upon acid modification can be suppressed, and accordingly, physical properties such as adhesive strength and impact strength can be secured, which is preferable.

In the polymer composition according to an embodiment of the present invention, for example, the graft ratio of the acid-modified polypropylene may be in a range from 1.0 to 20 mass%.

### Melting Point

The melting point of the acid-modified polypropylene is not particularly limited, but is preferably 90°C or higher, and more preferably 120°C or higher. With a melting point of 90°C or higher, heat sterilization by boiling is possible, and with a melting point of 120°C or higher, use for retort packs is possible. It is to be noted that the melting point can be measured by a differential scanning calorimeter (DSC), usually at a temperature rise rate and a temperature decrease rate of 10°C/min. However, the melting point is usually 200°C or lower.

The amount of the acid-modified polypropylene eluted in n-heptane (25°C, 60 minutes), which is measured according to the elution test specified in the Food Sanitation Act, is not particularly limited, but is preferably 150 ppm by mass or less, and more preferably 30 ppm by mass or less. A high oil resistance is preferred because the acid-modified polypropylene can be used as a packaging material for a highly oily substance such as an oily food.

### Dimethylfuran Compound

The dimethylfuran compound is a compound selected from the group consisting of 2,5-dimethylfuran, 2,4-dimethylfuran, and 3,4-dimethylfuran.

The polymer composition according to an embodiment of the present invention contains a dimethylfuran compound. The dimethylfuran compound is generated from at least one selected from the group consisting of acetone and derivatives thereof contained in a reaction solvent to be used in a production method described later. It is considered that the dimethylfuran compound is generated through a certain reaction of at least one selected from the group consisting of acetone and derivatives thereof contained in the reaction solvent as a starting substance.

The total content of the dimethylfuran compounds based on the total mass of the polymer composition is less than 15 ppm by mass, preferably 12 ppm by mass or less, and more preferably 11 ppm by mass or less. When the total content of the dimethylfuran compounds based on the total mass of the polymer composition is 15 ppm by mass or more, the change in hue, particularly the value of the yellowness index (YI), of a molded product of the polymer composition becomes large.

On the other hand, the lower limit value of the total content of the dimethylfuran compounds based on the total mass of the polymer composition is not particularly limited, and can be, for example, 0.5 ppm by mass or more, 0.7 ppm by mass or more, or 1 ppm by mass or more.

Examples of a method for reducing the total content of the dimethylfuran compounds based on the total mass of the polymer composition to less than 15 ppm by mass include purifying the reaction solvent used in the production of the acid-modified polypropylene by distillation to remove acetone and derivatives thereof, and repeating crystallization purification described later.

### Other Components

### Additive

The polymer composition according to an embodiment of the present invention can contain various additives as other components. Examples of such additives include an antioxidant and polymer stabilizers such as metal soap and hydrotalcite.

When the polymer composition contains the additive, its content is preferably 1 mass% or less, more preferably 0.7 mass% or less, and still more preferably 0.5 mass% or less, based on the total mass of the polymer composition.

### Properties of Polymer Composition

### YI

The polymer composition according to an embodiment of the present invention having a lower YI is more preferable, and the YI is preferably 40 or less, more preferably 35 or less, and still more preferably 30 or less. When the YI of the polymer composition is within the above-described range, even when used for molding of a film, a sheet, a bottle, or the like, the hue problem of a molded product is less likely to occur, which is preferable.

On the other hand, the lower limit value of the YI of the polymer composition is not particularly limited, and may be, for example, 1 or more, 2 or more, or 3 or more.

The YI can be measured, for example, by processing the obtained polymer composition into a sheet shape and measuring the obtained sheet-shaped sample using a color difference meter.

### Melt Flow Rate

In the polymer composition according to an embodiment of the present invention, the melt flow rate (hereinafter, also referred to as "MFR") as measured under conditions of 180°C and a load of 21.2 N in accordance with JIS K 7210:2014 is not particularly limited, but is preferably 150 g/10 min or more, more preferably 170 g/10 min or more, and still more preferably 200 g/10 min or more. In addition, the melt flow rate is preferably 2000 g/10 min or less, more preferably 1800 g/10 min or less, and still more preferably 1500 g/10 min or less.

When the melt flow rate is 150 g/10 min or more, the dispersibility of the polymer composition containing the acid-modified polypropylene in another polymer such as polypropylene is good, which is preferable. In addition, when the melt flow rate is 2000 g/10 min or less, a decrease in the mechanical strength of the acid-modified polypropylene can be suppressed, which is preferable.

The polymer composition according to an embodiment of the present invention can have a melt flow rate of from 150 to 2000 g/10 min as measured under conditions of 180°C and a load of 21.2 N in accordance with JIS K 7210:2014, for example.

### Application of Polymer Composition

The polymer composition according to an embodiment of the present invention has a small change in hue of a molded product, particularly a small value of the yellowness index (YI), and therefore can be suitably used for, for example, food packaging materials such as films and trays for food packaging; medical product packaging materials such as infusion bags, nutrient/liquid food bags, and ostomy bags, medical device components for joining an injection molded component such as a drip cylinder or a syringe to a metal needle, fluid transport instruments such as bottles and tubes for medical use, medical products such as pharmaceutical tubes and pharmaceutical containers such as pharmaceutical bottles; automobile parts such as fuel tanks, fuel tubes, automobile coolant tubes, particularly electric vehicle coolant tubes; and battery components such as exterior films and tab lead films for secondary batteries in the fields of electronics, automobiles, and robotics.

The polymer composition according to an embodiment of the present invention can be suitably used for applications requiring high cooling efficiency in a limited space, such as a coolant tube particularly for an electric vehicle, among automobile parts. In an electric vehicle, a battery tends to be increased in size for the purpose of increasing its output and extending a cruising distance, and a cooling system in which a coolant tube is efficiently disposed in a more limited space is required in order to maintain a volume (indoor space) inside the vehicle. The polymer composition according to an embodiment of the present invention has excellent adhesiveness, and thus can be suitably used for applications such as an electric vehicle coolant tube.

That is, preferred examples of the embodiment of the present invention include food packaging materials, medical products, automobile parts, and battery components, each of which contains the polymer composition described above. In addition, preferred examples of the embodiment of the present invention include use of the aforementioned polymer composition for food packaging materials, medical products, automobile parts, and battery components.

### Method for Producing Polymer Composition

A method for producing a polymer composition according to an embodiment of the present invention includes the following step 1A to step 5A in this order (hereinafter, also referred to as "production method A"):

### Step 1A

Heat-dissolving polypropylene and at least one acid component selected from the group consisting of unsaturated carboxylic acids and derivatives thereof in a reaction solvent containing an aromatic hydrocarbon-based solvent and at least one selected from the group consisting of acetone and derivatives thereof to obtain a solution 1A containing the polypropylene and the acid component.

### Step 2A

Adding an organic peroxide to the solution 1A to obtain a solution 2A containing an acid-modified polypropylene.

### Step 3A

Separating the solution 2A into a polymer composition and a filtrate to obtain the polymer composition.

### Step 4A

Subjecting the filtrate to a purification treatment to obtain a treated solvent.

### Step 5A

Reusing the treated solvent as a part or all of the reaction solvent in the step 1A.

A method for producing a polymer composition according to another embodiment of the present invention includes the following step 1B to step 4B in this order (hereinafter, also referred to as "production method B").

### Step 1B

Heat-dissolving polypropylene and at least one acid component selected from the group consisting of unsaturated carboxylic acids and derivatives thereof in a reaction solvent containing an aromatic hydrocarbon-based solvent and at least one selected from the group consisting of acetone and derivatives thereof to obtain a solution 1B containing the polypropylene and the acid component.

### Step 2B

Adding an organic peroxide to the solution 1B to obtain a solution 2B containing an acid-modified polypropylene.

### Step 3B

Separating the solution 2B into a polymer composition and a filtrate by crystallization purification to obtain the polymer composition.

### Step 4B

Purifying the filtrate by distillation.

The preferred ranges of the polymer composition in the method for producing a polymer composition according to the embodiment of the present invention and in the method for producing a polymer composition according to the other embodiment of the present invention are the same as the ranges described in the section "Polymer Composition" described above.

### Production Method A: Step 1A

The step 1A in the production method A is a step of heat-dissolving polypropylene and at least one acid component selected from the group consisting of unsaturated carboxylic acids and derivatives thereof in a reaction solvent containing an aromatic hydrocarbon-based solvent and at least one selected from the group consisting of acetone and derivatives thereof to obtain a solution 1A containing the polypropylene and the acid component.

### Components in Step 1A

The polypropylene, acid component, aromatic hydrocarbon-based solvent, and reaction solvent, which are the components in the step 1A of the production method A, will be described in detail below.

### · Polypropylene

In one embodiment, various well-known propylene-based polymers can be used as the polypropylene, and examples thereof include, but are not particularly limited to, a propylene homopolymer, a copolymer of ethylene and propylene, copolymers of propylene and other comonomers, for example, α-olefin comonomers having two or more carbon atoms, such as butene-1, pentene-1, hexene-1, heptene-1, octene-1, cyclopentene, cyclohexene, and norbornene, or copolymers of two or more of these comonomers. The α-olefin comonomer is preferably an α-olefin comonomer having from 2 to 6 carbon atoms. The polypropylene may be a random copolymer or a block copolymer. The polypropylene may also be a mixture of these.

In a case in which the polypropylene is a copolymer or a mixture, the polypropylene component is contained in an amount of preferably at least 30 mass% or more, more preferably 50 mass% or more, and still more preferably 70 mass% or more.

However, the most preferred is a propylene homopolymer. A higher content of propylene in the monomers constituting the polypropylene tends to result in higher heat resistance and stronger adhesion to the polypropylene. Furthermore, the gelation is less likely to occur, and defects such as so-called fish eyes are suppressed from being generated.

As the polypropylene, isotactic polypropylene is preferred. Isotactic polypropylene has higher crystallinity and is excellent in rigidity, heat resistance, and oil resistance as compared with polypropylene having other stereoregularity such as atactic or syndiotactic polypropylene, and therefore isotactic polypropylene is preferred. Because of excellent rigidity, even a relatively thin laminate can maintain its strength, and therefore the laminate can be preferably used as a container formed of a laminate sheet or the like. In addition, excellent heat resistance enables molding at high temperatures, and also enables heat sterilization in usage for food applications and medical applications, which is advantageous from hygienic standpoint. Furthermore, a further higher heat resistance is required in use as a retort pack.

The isotactic polypropylene is a general-purpose inexpensive product, allowing supply of inexpensive products, and therefore it is preferred.

The molecular weight of the polypropylene is not particularly limited as long as it does not significantly deviate from the object of the present invention, but the molecular weight is preferably higher because the molecular weight tends to be lowered by β-cleavage reaction upon graft reaction, and the MFR measured in accordance with JIS K 7210:2014 under the conditions of 230°C and 21.2 N is preferably 0.01 g/10 min or more. More preferably, the MFR is 0.1 g/10 min or more.

In addition, the MFR is preferably 30 g/10 min or less and more preferably 20 g/10 min or less. The polypropylene may be used singly or in combination of two or more thereof.

### · Acid Component

In one embodiment, the acid component is at least one selected from the group consisting of unsaturated carboxylic acids and derivatives thereof. The acid component is not particularly limited as long as it does not significantly deviate from the object of the present invention, and is preferably an unsaturated carboxylic acid having two or more carboxyl groups and a derivative thereof. Specific examples of the acid component include unsaturated carboxylic acids such as maleic acid, fumaric acid, mesaconic acid, citraconic acid, itaconic acid, aconitic acid, and crotonic acid; and carboxylic anhydrides such as maleic anhydride, itaconic anhydride, and citraconic anhydride. Maleic acid and maleic anhydride are preferred with maleic anhydride being particularly preferred. The acid component may be used singly or in combination of two or more thereof.

The amount of the acid component used is not particularly limited, but is preferably 5 parts by mass or more, more preferably 7 parts by mass or more, and still more preferably 10 parts by mass or more, based on 100 parts by mass of the polypropylene. Also, the amount of the acid component used is preferably 40 parts by mass or less, more preferably 35 parts by mass or less, and still more preferably 30 parts by mass or less.

### · Aromatic Hydrocarbon-Based Solvent

The aromatic hydrocarbon-based solvent is not particularly limited, and examples thereof include aromatic hydrocarbons such as benzene, toluene, xylene, and tert-butylbenzene; and halogenated aromatic hydrocarbons such as monochlorobenzene and o-dichlorobenzene. Among these, toluene, xylene, tert-butylbenzene, and monochlorobenzene are preferable. The aromatic hydrocarbon-based solvent may be used singly or in combination of two or more thereof.

The amount of the aromatic hydrocarbon-based solvent used is not particularly limited, but is preferably 300 parts by mass or more, more preferably 350 parts by mass or more, and still more preferably 400 parts by mass or more, based on 100 parts by mass of the polypropylene. The amount of the aromatic hydrocarbon-based solvent used is preferably 1500 parts by mass or less, more preferably 1200 parts by mass or less, and still more preferably 1000 parts by mass or less.

### · Reaction Solvent

The reaction solvent contains the aromatic hydrocarbon-based solvent and at least one selected from the group consisting of acetone and derivatives thereof. The at least one selected from the group consisting of acetone and derivatives thereof to be contained in the reaction solvent may be mixed in, for example, the step of separating the solution 2A into a polymer composition and a filtrate to obtain the polymer composition (step 3A), the step of reusing the treated solvent as a part or all of the reaction solvent in the step 1A (step 5A), the step of separating the solution 2B into a polymer composition and a filtrate by crystallization purification to obtain the polymer composition (step 3B), and the like.

The total content of the at least one selected from the group consisting of acetone and derivatives thereof in the reaction solvent is not particularly limited, but is preferably 1500 ppm by mass or less, more preferably 1300 ppm by mass or less, and still more preferably 1000 ppm by mass or less.

On the other hand, the lower limit value of the total content of the at least one selected from the group consisting of acetone and derivatives thereof in the reaction solvent is not particularly limited, and can be, for example, 30 ppm by mass or more, 40 ppm by mass or more, or 50 ppm by mass or more.

Here, the derivative of acetone is a general compound produced from acetone as a starting substance, and examples of such a compound include mesityl oxide, 2,5-hexanedione, and the like.

### Heat-Dissolution

The heat-dissolution is a step of dissolving the polypropylene and the acid component in the heated reaction solvent. In carrying out the step 2A, an atmosphere during the heat-dissolution is preferably an atmosphere of an inert gas such as a nitrogen gas. In carrying out the step 2A, the heating temperature is preferably in a range of the boiling point of the reaction solvent, specifically preferably in a range from 80°C to 180°C. The order of charging the polypropylene, the acid component, and the reaction solvent is not particularly limited, but it is preferable in terms of production that the reaction solvent is charged followed by charge of the polypropylene and the acid component.

### Production Method A: Step 2A

The step 2A in the production method A is a step of adding an organic peroxide to the solution 1A to obtain a solution 2A containing an acid-modified polypropylene.

### Component in Step 2A

The organic peroxide, which is the component in the step 2A of the production method A, will be described in detail below.

### · Organic Peroxide

The organic peroxide is not particularly limited, and examples thereof include dialkyl peroxides such as dicumyl peroxide and 2,5-dimethyl-2,5-di(tert-butylperoxy)hexane; peroxyketals such as 1,1-di(tert-butylperoxy)cyclohexane and 1,1-di(tert-hexylperoxy)cyclohexane; peroxyesters such as tert-butylperoxyisopropyl monocarbonate, tert-hexylperoxyisopropyl monocarbonate and tert-hexylperoxy-2-ethylhexyl monocarbonate. Among these, preferred are dicumyl peroxide, 2,5-dimethyl-2,5-di(tert-butylperoxy)hexane, 1,1-di(tert-butylperoxy)cyclohexane, and tert-butylperoxyisopropyl monocarbonate, and more preferred are dicumyl peroxide, 2,5-dimethyl-2,5-di(tert-butylperoxy)hexane, and tert-butylperoxyisopropyl monocarbonate, because they have a higher graft reaction rate than a β-cleavage rate.

### Reaction Conditions

The reaction conditions after the addition of the organic peroxide are not particularly limited. In one embodiment, the reaction temperature can be in a range from 20°C to 160°C. Also, the reaction time can be in a range from 1 hour to 15 hours. Thereby, the solution 2A can be obtained.

### Production Method A: Step 3A

The step 3A in the production method A is a step of separating the solution 2A into a polymer composition and a filtrate to obtain the polymer composition.

### Component in Step 3A

The filtrate, which is the component in the step 3A of the production method A, will be described in detail below.

### · Filtrate

The filtrate is a remaining liquid after the polymer composition has been separated from the solution 2A. The filtrate contains the aromatic hydrocarbon-based solvent and at least one selected from the group consisting of acetone and derivatives thereof.

The total content of the at least one selected from the group consisting of acetone and derivatives thereof based on the total mass of the filtrate is preferably from 10 to 85 mass%, more preferably from 15 to 75 mass%, and still more preferably from 20 to 65 mass%. The content of 10 mass% or more, which allows the amount of the acid-modified polypropylene precipitated to be increased, is therefore preferred, and the content of 85 mass% or less, which enhances the efficiency of removing a component containing the at least one selected from the group consisting of acetone and derivatives thereof from the filtrate and/or purifying for obtaining a treated solvent, is therefore preferred.

### Method of Separating Polymer Composition from Solution 2A

The method for separating the polymer composition from the solution 2A is not particularly limited, and an example thereof includes a method including crystallization purification. That is, the step 3A may include separating the solution 2A into the polymer composition and the filtrate by crystallization purification.

In the crystallization purification, examples of the solvent to be added for precipitating the acid-modified polypropylene include ketones such as acetone and methyl ethyl ketone; esters such as methyl acetate and ethyl acetate; and alcohols such as methanol and ethanol. Among these, acetone and methyl ethyl ketone are preferable, and acetone is more preferable, from the viewpoint of facilitating their separation from the aromatic hydrocarbon-based solvent and suppression of side reactions.

For the purpose of removing the remaining aromatic hydrocarbon-based solvent, the acid-modified polypropylene precipitated by the crystallization purification may be further washed with the same solvent as the solvent added in the purification.

### Production Method A: Step 4A

The step 4A in the production method A is a step of subjecting the filtrate to a purification treatment to obtain a treated solvent.

### Component in Step 4A

The treated solvent, which is the component in the step 4A of the production method A, will be described in detail below.

### · Treated Solvent

The treated solvent is obtained by subjecting the filtrate to a purification treatment. The treatment solvent contains the aromatic hydrocarbon-based solvent and at least one selected from the group consisting of acetone and derivatives thereof.

The total content of the at least one selected from the group consisting of acetone and derivatives thereof based on the total mass of the treated solvent is reduced as compared with the content in the filtrate.

The total content of the at least one selected from the group consisting of acetone and derivatives thereof based on the total mass of the treated solvent is preferably 0.2 mass% or less, more preferably 0.15 mass% or less, and still more preferably 0.1 mass% or less. A lower content is more favorable, and the lower limit value thereof is not particularly limited, but may be, for example, 0.001 mass% or more, 0.005 mass% or more, or 0.01 mass% or more.

### Method for Obtaining Treated Solvent

The treated solvent is obtained by subjecting the filtrate to a purification treatment. The method of the purification treatment is not particularly limited, but it is preferable to include purification by distillation and purification of removing a water-soluble component by water extraction. From the viewpoint of reducing the total content of the at least one selected from the group consisting of acetone and derivatives thereof based on the total mass of the treated solvent, the purification treatment in the step 4A preferably includes purification by distillation.

Examples of the purification by distillation include simple distillation utilizing a difference in boiling point between components contained in the filtrate, and precision distillation in which a distillation column is filled with a filler to increase its separation efficiency, and the precision distillation is preferable from the viewpoint of separating the at least one selected from the group consisting of acetone and derivatives thereof.

### Production Method A: Step 5A

The step 5A in the production method A is a step of reusing the treated solvent obtained in the step 4A as a part or all of the reaction solvent in the step 1A.

The method for reusing the treated solvent obtained in the step 4A as the reaction solvent in the step 1A is not particularly limited, and for example, the treated solvent may be solely used as the reaction solvent, or the treated solvent and an aromatic hydrocarbon-based solvent (new product which is not the reused product) may be blended and used.

### Production Method B: Step 1B

The step 1B in the production method B is a step of heat-dissolving polypropylene and at least one acid component selected from the group consisting of unsaturated carboxylic acids and derivatives thereof in a reaction solvent containing an aromatic hydrocarbon-based solvent and at least one selected from the group consisting of acetone and derivatives thereof to obtain a solution 1B containing the polypropylene and the acid component.

### Components in Step 1B

The aromatic hydrocarbon-based solvent, polypropylene, and acid component, which are the components in the step 1B of the production method B, are the same as those described in the step 1A of the production method A.

### Heat-Dissolution

The conditions for the heat-dissolution may be the same as those described in the step 1A of the production method A.

### Production Method B: Step 2B

The step 2B in the production method B is a step of adding an organic peroxide to the solution 1B to obtain a solution 2B containing an acid-modified polypropylene.

### Component in Step 2B

The organic peroxide, which is the component in the step 2B of the production method B, is the same as that described in the step 2A of the production method A.

### Reaction Conditions

The reaction conditions after the addition of the organic peroxide may be the same as those described in the step 2A of the production method A. Thereby, the solution 2B can be obtained.

### Production Method B: Step 3B

The step 3B in the production method B is a step of separating the solution 2B into a polymer composition and a filtrate by crystallization purification to obtain the polymer composition.

The crystallization purification may be carried out in the same manner as described in the step 3A of the production method A. In this manner, the polymer composition can be obtained.

### Production Method B: Step 4B

The step 4B in the production method B is a step of purifying the filtrate by distillation.

The purification by distillation may be carried out in the same manner as described in the step 4A of the production method A.

### Additional Step

The production method A and the production method B may include an additional step in addition to the aforementioned steps. Examples of such a step include a step of bubbling the reaction liquid with nitrogen before addition of the organic peroxide, a step of extracting the reaction liquid or the like with water, a step of decolorizing the reaction liquid or the like, a step of drying the acid-modified polypropylene, and a step of pulverizing the acid-modified polypropylene.

### Method for Producing Solution of Crude Polymer Composition

A method for producing a solution of a crude polymer composition according to an embodiment of the present invention is a method for producing a solution of a crude polymer composition, containing
an acid-modified polypropylene and at least one dimethylfuran compound selected from the group consisting of 2,5-dimethylfuran, 2,4-dimethylfuran, and 3,4-dimethylfuran, the method including
the following step 1C to step 2C in this order (hereinafter, also referred to as a "production method C"):

### Step 1C

Heat-dissolving polypropylene and at least one acid component selected from the group consisting of unsaturated carboxylic acids and derivatives thereof in a reaction solvent containing an aromatic hydrocarbon-based solvent and at least one selected from the group consisting of acetone and derivatives thereof to obtain a solution 1C containing the polypropylene and the acid component:

### Step 2C

Adding an organic peroxide to the solution 1C to obtain a solution 2C of a crude polymer composition containing an acid-modified polypropylene.

The method for producing a solution of a crude polymer composition according to an embodiment of the present invention may be included as the process of the method for producing the polymer composition described above.

### Production Method C: Step 1C

The step 1C in the production method C is a step of heat-dissolving polypropylene and at least one acid component selected from the group consisting of unsaturated carboxylic acids and derivatives thereof in a reaction solvent containing an aromatic hydrocarbon-based solvent and at least one selected from the group consisting of acetone and derivatives thereof to obtain a solution 1C containing the polypropylene and the acid component.

### Components in Step 1C

The polypropylene, acid component, aromatic hydrocarbon-based solvent, and reaction solvent, which are the components in the step 1C of the production method C, are the same as those described in the step 1A of the production method A.

### Heat-Dissolution

The conditions for the heat-dissolution may be the same as those described in the step 1A of the production method A.

### Production Method C: Step 2C

The step 2C in the production method C is a step of adding an organic peroxide to the solution 1C to obtain a solution 2C of a crude polymer composition containing an acid-modified polypropylene.

### Component in Step 2C

The organic peroxide, which is the component in the step 2C of the production method C, is the same as that described in the step 2A of the production method A. The crude polymer composition, which is the component in the step 2C of the production method C, will be described in detail below.

### · Crude Polymer Composition

The crude polymer composition is the same as that described in the section "Polymer Composition" described above, except that the total content of the dimethylfuran compounds based on the total mass of the crude polymer composition is not limited to less than 15 ppm by mass, and the preferred range of the total content is also the same as that described in the section. That is, the total content of the dimethylfuran compounds based on the total mass of the crude polymer composition may be 15 ppm by mass or more, or may be less than 15 ppm by mass.

In a case in which the total content of the dimethylfuran compounds based on the total mass of the polymer composition is required to be extremely low, further purification of the polymer composition may be required even though the content is less than 15 ppm by mass. In such a case, even though the total content of the dimethylfuran compounds based on the total mass of the polymer composition is less than 15 ppm by mass, the polymer composition can be the crude polymer composition.

When the total content of the dimethylfuran compounds based on the total mass of the crude polymer composition is less than 15 ppm by mass, a preferred embodiment of the crude polymer composition is the same as that described in the section "Polymer Composition" described above.

### Reaction Conditions

The reaction conditions after the addition of the organic peroxide may be the same as those described in the step 2A of the production method A.

### Additional Step

The production method C may include an additional step in addition to the aforementioned steps. Examples of such a step include a step of bubbling the reaction liquid with nitrogen before addition of the organic peroxide, a step of extracting the reaction liquid or the like with water, a step of decolorizing the reaction liquid or the like, a step of drying the acid-modified polypropylene, and a step of pulverizing the acid-modified polypropylene.

### Method for Producing Crude Polymer Composition

A method for producing a crude polymer composition according to an embodiment of the present invention is a method for producing a crude polymer composition, containing
an acid-modified polypropylene and at least one dimethylfuran compound selected from the group consisting of 2,5-dimethylfuran, 2,4-dimethylfuran, and 3,4-dimethylfuran, the method including
the following step 1D to step 3D in this order (hereinafter, also referred to as "production method D"):

### Step 1D

Heat-dissolving polypropylene and at least one acid component selected from the group consisting of unsaturated carboxylic acids and derivatives thereof in a reaction solvent containing an aromatic hydrocarbon-based solvent and at least one selected from the group consisting of acetone and derivatives thereof to obtain a solution 1D containing the polypropylene and the acid component.

### Step 2D

Adding an organic peroxide to the solution 1D to obtain a solution 2D containing an acid-modified polypropylene.

### Step 3D

Separating the solution 2D into a crude polymer composition and a filtrate to obtain the crude polymer composition.

The method for producing a crude polymer composition according to an embodiment of the present invention may be included as the process of the method for producing the polymer composition.

The method for producing a crude polymer composition according to an embodiment of the present invention may include a step 4D and a step 5D after the step 3D in this order:

### Step 4D

Subjecting the filtrate to a purification treatment to obtain a treated solvent.

### Step 5D

Reusing the treated solvent as a part or all of the reaction solvent in the step 1D.

### Production Method D: Step 1D

The step 1D in the production method D is a step of heat-dissolving polypropylene and at least one acid component selected from the group consisting of unsaturated carboxylic acids and derivatives thereof in a reaction solvent containing an aromatic hydrocarbon-based solvent and at least one selected from the group consisting of acetone and derivatives thereof to obtain a solution 1D containing the polypropylene and the acid component.

### Components in Step 1D

The polypropylene, acid component, aromatic hydrocarbon-based solvent, and reaction solvent, which are the components in the step 1D of the production method D, are the same as those described in the step 1A of the production method A.

### Heat-Dissolution

The conditions for the heat-dissolution may be the same as those described in the step 1A of the production method A.

### Production Method D: Step 2D

The step 2D in the production method D is a step of adding an organic peroxide to the solution 1D to obtain a solution 2D containing an acid-modified polypropylene.

The organic peroxide, which is the component in the step 2D of the production method D, is the same as that described for the step 2A of the production method A.

### Reaction Conditions

The reaction conditions after the addition of the organic peroxide may be the same as those described in the step 2A of the production method A.

### Production Method D: Step 3D

The step 3D in the production method D is a step of separating the solution 2D into a crude polymer composition and a filtrate to obtain the crude polymer composition.

### Component in Step 3D

The filtrate, which is the component in the step 3D of the production method D, is the same as that described in the step 3A of the production method A.

### Method of Separating Polymer Composition from Solution 2D

The method for separating the polymer composition from the solution 2D is the same method as that described in the step 3A of the production method A. For example, the step 3D may include separating the solution 2D into the polymer composition and the filtrate by crystallization purification.

### Production Method D: Step 4D

The step 4D in the production method D is a step of subjecting the filtrate to a purification treatment to obtain a treated solvent.

### Component in Step 4D

The treated solvent, which is the component in the step 4D of the production method D, is the same as that described in the step 4A of the production method A. For example, the total content of the at least one selected from the group consisting of acetone and derivatives thereof based on the total mass of the treated solvent is preferably 0.2 mass% or less, more preferably 0.15 mass% or less, and still more preferably 0.1 mass% or less. A lower content is more favorable, and the lower limit value is not particularly limited, but may be, for example, 0.001 mass% or more, 0.005 mass% or more, or 0.01 mass% or more.

### Method for Obtaining Treated Solvent

The treated solvent is obtained by subjecting the filtrate to a purification treatment. The purification treatment method may be the same as that described in the step 4A of the production method A. For example, the purification treatment in the step 4D preferably includes purification by distillation. The purification by distillation may also be carried out in the same manner as described in the step 4A of the production method A.

### Production Method D: Step 5D

The step 5D in the production method D is a step of reusing the treated solvent obtained in the step 4D as a part or all of the reaction solvent in the step 1D.

The method for reusing the treated solvent obtained in the step 4D as the reaction solvent in the step 1D may be the same as that described in the step 5A of the production method A.

### Additional Step

The production method D may include an additional step in addition to the aforementioned steps. Examples of such a step include a step of bubbling the reaction liquid with nitrogen before adding the organic peroxide, a step of extracting the reaction liquid or the like with water, a step of decolorizing the reaction liquid or the like, a step of drying the acid-modified polypropylene, and a step of pulverizing the acid-modified polypropylene.

### Examples

### Production of Polymer Composition

### Example 1

### Reaction Solvent

A glass flask equipped with a stirrer, a thermometer, a reflux condenser, and a dropping funnel was charged with an isotactic propylene homopolymer, maleic anhydride, and monochlorobenzene, and the mixture was dissolved under a nitrogen atmosphere. Thereafter, dicumyl peroxide as the organic peroxide was added, and the mixture was reacted to obtain a solution. To the solution was added acetone, and a polymer precipitated by crystallization purification was filtered off to obtain a filtrate. The filtrate was purified by distillation and reused as a reaction solvent in the production of the polymer composition of Example 1. The reaction solvent used in Example 1 was monochlorobenzene containing 13 ppm by mass of acetone and 53 ppm by mass of mesityl oxide.

### Production of Polymer Composition

A glass flask equipped with a stirrer, a thermometer, a reflux condenser, and a dropping funnel was charged with 100 parts by mass of an isotactic propylene homopolymer having an MFR of 10 g/10 min (measured at 230°C and 21.2 N in accordance with JIS K 7210:2014), 19 parts by mass of maleic anhydride, and 750 parts by mass of the reaction solvent, and the mixture was dissolved at 127°C under a nitrogen gas atmosphere. To the mixture was added 7 parts by mass of dicumyl peroxide as the organic peroxide from the dropping funnel at the same temperature, and the mixture was reacted for 9 hours while being stirred at the same temperature. After completion of the reaction, the reaction liquid was cooled to nearly the room temperature, and acetone was added to precipitate a polymer. The precipitated polymer was filtered off, and the filtered polymer was repeatedly slurry-washed with acetone. The washed polymer was dried under reduced pressure to obtain the polymer composition of Example 1 as a white powder.

### Example 2

The polymer composition of Example 2 was obtained as a white powder in the same manner as in Example 1, except that monochlorobenzene containing 274 ppm by mass of acetone and 42 ppm by mass of mesityl oxide was used as the reaction solvent.

### Example 3

The polymer composition of Example 3 was obtained as a white powder in the same manner as in Example 1, except that monochlorobenzene containing 503 ppm by mass of acetone and 37 ppm by mass of mesityl oxide was used as the reaction solvent.

### Comparative Example 1

The polymer composition of Comparative Example 1 was obtained as a white powder in the same manner as in Example 1, except that monochlorobenzene containing 688 ppm by mass of acetone and 96 ppm by mass of mesityl oxide was used as the reaction solvent.

### Quantification of Dimethylfuran Compounds in Polymer Composition

Using a thermal extraction GC/MS (Agilent 7890/Agilent 5977A, available from Agilent Technologies, Inc.), the dimethylfuran compounds in the polymer composition were quantified with 2,5-dimethylfuran (available from FUJIFILM Wako Pure Chemical Corporation) as a standard sample. The sample preparation and GC/MS analysis conditions are as follows.

It is to be noted that the dimethylfuran compound includes at least one or all of 2,5-dimethylfuran, 2,4-dimethylfuran, and 3,4-dimethylfuran, and the total content of the dimethylfuran compounds as used herein means the value measured using 2,5-dimethylfuran as a standard sample.

### Sample Preparation

10 mg of the polymer composition obtained in each of Examples and Comparative Examples was weighed and inserted into a thermal desorption tube (available from GERSTEL GmbH & Co.KG). The thermal desorption tube was inserted into a thermal desorption apparatus TDU (available from GERSTEL GmbH & Co.KG) at 40°C, the inside of the tube was purged with helium, and the temperature was raised to 180°C at a rate of 12°C/sec to perform thermal extraction for 10 minutes. During the thermal extraction, the volatile components generated from the sample were collected by cooling a GC injection port CIS4 (available from GERSTEL GmbH & Co.KG) filled with quartz wool to -150°C. The components cooled and collected at the GC injection port were vaporized by rapidly heating the collected portion to 300°C, introduced into the GC column, and subjected to GC/MS (Agilent 7890/Agilent 5977A) measurement.

### GC/MS Measurement Conditions

· Column: DB-5MSUI 30 m × 250 µm × 0.25 µm
· Column flow rate: 1.0 m/min
· Carrier gas: He
· Oven temperature: It was kept at 40°C for 5 minutes, and then raised to 300°C at a temperature rise rate of 10°C/min. Further, the temperature was kept at 300°C for 20 minutes.
· Injection mode: Solvent
· Split ratio: 1 : 50
· Measurement Mode: EI Scan

### YI Measurement of Sheet-Shaped Polymer Composition

### Fabrication of Sample

A sheet (200 × 200 × 2 mm thickness) of the polymer composition obtained in each of Examples and Comparative Examples was fabricated using a press molding machine (Shinto F-TYPE Hydraulic Press NF-37H, available from Shinto Metal Industries Corporation).

The press conditions were as follows.
· Heating temperature: 160°C
· Preheating time: 5 minutes, no pressure
· Pressurization conditions: 8 MPa, 2 minutes
· Cooling conditions: 10 MPa, 2 minutes

### Measurement of YI

The YI of the obtained sheet was measured using a color difference meter ZE6000 available from Nippon Denshoku Industries Co., Ltd.

### Measurement Results

The total content of the dimethylfuran compounds in the polymer composition obtained in each of Examples and Comparative Examples and the YI of the sheet-shaped polymer composition are listed in Table 1.

### [Table 1]

**Table 1**

| | Total content of dimethylfuran compounds in polymer composition [ppm by mass] | YI of sheet-shaped polymer composition |
|---|---|---|
| Example 1 | < 1 | 7 |
| Example 2 | 3 | 12 |
| Example 3 | 10 | 23 |
| Comparative Example 1 | 18 | 32 |

As listed in Table 1, the polymer compositions of Examples 1 to 3, in which the total content of the dimethylfuran compounds was less than 15 ppm by mass, exhibited a lower YI than Comparative Example 1.

Although various embodiments have been described above, it is needless to say that the present invention is not limited to such embodiments. It will be apparent to those skilled in the art that various changes and modifications can be made within the scope of the claims, and it should be understood that such changes and modifications naturally fall within the technical scope of the present invention. In addition, the constituent elements in the above-described embodiments may be combined in any way without departing from the gist of the invention.

The present application is based on Patent Application JP 2024-001830 filed on January 10, 2024, the content of which is incorporated herein by reference.

### Industrial Applicability

The polymer composition according to an embodiment of the present invention has a small change in hue of the molded product, particularly a small value of the yellowness index (YI), and therefore can be suitably used for, for example, food packaging materials such as films and trays for food packaging, medical product packaging materials such as infusion bags, nutrient/liquid food bags, and ostomy bags, medical device components for joining an injection molded component such as a drip cylinder or syringe to a metal needle, fluid transport instruments such as bottles and tubes for medical use, medical products such as pharmaceutical tubes and pharmaceutical containers such as pharmaceutical bottles, automobile parts such as fuel tanks, fuel tubes, automobile coolant tubes, particularly electric vehicle coolant tubes, and battery components such as exterior films and tab lead films for secondary batteries in the fields of electronics, automobiles, and robotics.

## Claims

1. A polymer composition, comprising
an acid-modified polypropylene and at least one dimethylfuran compound selected from the group consisting of 2,5-dimethylfuran, 2,4-dimethylfuran, and 3,4-dimethylfuran, wherein
a total content of the dimethylfuran compound based on a total mass of the polymer composition is less than 15 ppm by mass.

2. The polymer composition according to claim 1, wherein the total content of the dimethylfuran compounds based on the total mass of the polymer composition is 0.5 ppm by mass or more.

3. The polymer composition according to claim 1, wherein the total content of the dimethylfuran compounds based on the total mass of the polymer composition is 1 ppm by mass or more.

4. The polymer composition according to claim 1, wherein the total content of the dimethylfuran compounds based on the total mass of the polymer composition is 12 ppm by mass or less.

5. The polymer composition according to claim 1, wherein the polymer composition has a melt flow rate of from 150 to 2000 g/10 min as measured under conditions of 180°C and a load of 21.2 N in accordance with JIS K 7210:2014.

6. The polymer composition according to claim 1, wherein a graft ratio of the acid-modified polypropylene is from 1.0 to 20 mass%.

7. A food packaging material, comprising the polymer composition according to any one of claims 1 to 6.

8. A medical product, comprising the polymer composition according to any one of claims 1 to 6.

9. An automobile part, comprising the polymer composition according to any one of claims 1 to 6.

10. A battery component, comprising the polymer composition according to any one of claims 1 to 6.

11. Use of the polymer composition according to any one of claims 1 to 6 for a food packaging material.

12. Use of the polymer composition according to any one of claims 1 to 6 for a medical product.

13. Use of the polymer composition according to any one of claims 1 to 6 for an automobile part.

14. Use of the polymer composition according to any one of claims 1 to 6 for a battery component.

15. A method for producing the polymer composition according to any one of claims 1 to 6, the method comprising
the following step 1A to step 5A in this order:
step 1A:
heat-dissolving polypropylene and at least one acid component selected from the group consisting of unsaturated carboxylic acids and derivatives thereof in a reaction solvent containing an aromatic hydrocarbon-based solvent and at least one selected from the group consisting of acetone and derivatives thereof to obtain a solution 1A containing the polypropylene and the acid component;
step 2A:
adding an organic peroxide to the solution 1A to obtain a solution 2A containing an acid-modified polypropylene;
step 3A:
separating the solution 2A into a polymer composition and a filtrate to obtain the polymer composition;
step 4A:
subjecting the filtrate to a purification treatment to obtain a treated solvent; and
step 5A:
reusing the treated solvent as a part or all of the reaction solvent in the step 1A.

16. The production method according to claim 15, wherein the step 3A includes separating the solution 2A into the polymer composition and the filtrate by crystallization purification.

17. The production method according to claim 15, wherein the purification treatment in the step 4A includes purification by distillation.

18. The production method according to claim 15, wherein
a total content of the at least one selected from the group consisting of acetone and derivatives thereof based on a total mass of the treated solvent is 0.2 mass% or less.

19. A method for producing the polymer composition according to any one of claims 1 to 6, the method comprising
the following step 1B to step 4B in this order:
step 1B:
heat-dissolving polypropylene and at least one acid component selected from the group consisting of unsaturated carboxylic acids and derivatives thereof in a reaction solvent containing an aromatic hydrocarbon-based solvent and at least one selected from the group consisting of acetone and derivatives thereof to obtain a solution 1B containing the polypropylene and the acid component;
step 2B:
adding an organic peroxide to the solution 1B to obtain a solution 2B containing an acid-modified polypropylene;
step 3B:
separating the solution 2B into a polymer composition and a filtrate by crystallization purification to obtain the polymer composition; and
step 4B:
purifying the filtrate by distillation.

20. A method for producing a solution of a crude polymer composition containing an acid-modified polypropylene and at least one dimethylfuran compound selected from the group consisting of 2,5-dimethylfuran, 2,4-dimethylfuran, and 3,4-dimethylfuran, the method comprising
the following step 1C and step 2C in this order:
step 1C:
heat-dissolving polypropylene and at least one acid component selected from the group consisting of unsaturated carboxylic acids and derivatives thereof in a reaction solvent containing an aromatic hydrocarbon-based solvent and at least one selected from the group consisting of acetone and derivatives thereof to obtain a solution 1C containing the polypropylene and the acid component; and
step 2C:
adding an organic peroxide to the solution 1C to obtain a solution 2C of a crude polymer composition containing an acid-modified polypropylene.

21. A method for producing a crude polymer composition containing an acid-modified polypropylene and at least one dimethylfuran compound selected from the group consisting of 2,5-dimethylfuran, 2,4-dimethylfuran, and 3,4-dimethylfuran, the method comprising the following step 1D to step 3D in this order:
step 1D:
heat-dissolving polypropylene and at least one acid component selected from the group consisting of unsaturated carboxylic acids and derivatives thereof in a reaction solvent containing an aromatic hydrocarbon-based solvent and at least one selected from the group consisting of acetone and derivatives thereof to obtain a solution 1D containing the polypropylene and the acid component;
step 2D:
adding an organic peroxide to the solution 1D to obtain a solution 2D containing an acid-modified polypropylene; and
step 3D:
separating the solution 2D into a crude polymer composition and a filtrate to obtain the crude polymer composition.

22. The production method according to claim 21, comprising a step 4D and a step 5D after the step 3D in this order:
step 4D:
subjecting the filtrate to a purification treatment to obtain a treated solvent; and
step 5D:
reusing the treated solvent as a part or all of the reaction solvent in the step 1D.

23. The production method according to claim 21, wherein the step 3D includes separating the solution 2D into the crude polymer composition and the filtrate by crystallization purification.

24. The production method according to claim 22, wherein the purification treatment in the step 4D includes purification by distillation.

25. The production method according to claim 22, wherein
a total content of at least one selected from the group consisting of acetone and derivatives thereof based on a total mass of the treated solvent is 0.2 mass% or less.

26. The production method according to claim 21, wherein a total content of the dimethylfuran compounds based on a total mass of the crude polymer composition is less than 15 ppm by mass.
